# EUROPÄISCHE PATENTSCHRIFT

(11) **EP 3 133 311 B1**
(45) Veröffentlichungstag und Bekanntmachung des Hinweises auf die Patenterteilung: **08.05.2019**
(21) Anmeldenummer: 16178134.9
(22) Anmeldetag: 06.07.2016
(51) Int. Cl.: F16D 41/30

(54) **HINTERRADNABE SOWIE FAHRRADACHSE**
REAR WHEEL HUB AND BICYCLE AXIS
MOYEU DE ROUE ARRIERE ET AXE DE VELO

(30) Priorität: 18.08.2015 DE 202015005747 U
(43) Veröffentlichungstag der Anmeldung: 22.02.2017
(73) Patentinhaber: Canyon Bicycles GmbH, 56073 Koblenz (DE)
(72) Erfinder: Scheffer, Lutz, 82467 Garmisch-Partenkirchen (DE); Thoma, Vincenz, 56068 Koblenz (DE); Lay, Lorenz, 56068 Koblenz (DE)
(74) Vertreter: dompatent von Kreisler Selting Werner - Partnerschaft von Patent- und Rechtsanwälten mbB

(56) Entgegenhaltungen:
- EP-A1- 3 118 019
- EP-A2- 1 777 427
- EP-A2- 2 722 549
- CA-A1- 2 078 053

## Beschreibung

Die Erfindung betrifft eine Hinterradnabe, die insbesondere für Mountainbikes und in besonders bevorzugter Ausführungsform für Downhill-Mountainbikes geeignet ist. Ferner betrifft die Erfindung eine entsprechende Fahrradachse.

Bei Mountainbikes mit Hinterradfederung und Kettenschaltung wird häufig eine Konstruktion der Hinterradaufhängung gewählt, die bei Beschleunigen das Fahrwerk stabilisiert, so dass nicht aufgrund der Radlastveränderung ein Einfedern erfolgt (sogenannter Anti-Squat). Hierzu ist es bekannt die Kettenzugkraft zur Stabilisierung zu nutzen, so dass hierdurch der Hinterbau zumindest teilweise am Einfedern gehindert wird. Insbesondere bei Downhill-Mountainbikes wird häufig eine Konstruktion gewählt, dass die Raderhebungskurve der Hinterradachse relativ flach nach hinten startet. Hierdurch kann das gefederte Hinterrad großen Hindernissen besser ausweichen. Sowohl die Erhöhung der Kettenzugkraft sowie eine entsprechende Raderhebungskurve führen dazu, dass sich beim Einfedern des Hinterrads der Abstand zwischen Tretlager und Hinterradnabe vergrößert. Da die Kette über die Sperrklinken des Freilaufs im Hinterrad drehfest mit diesem gekoppelt ist, führt die Abstandsvergrößerung zwischen Tretlager und Hinterradnabe zu einem Zurückdrehen des Kettenblatts und somit zu einer Pedalrückdrehung. Da der Fahrer die Hauptmasse des Systems bildet, und insbesondere während der Fahrt im Gelände das Gewicht des Fahrers auf den Pedalen lastet wird ein derartiger Pedalrückschlag vom Fahrer als Federverhärtung empfunden. In diesem Moment ist aufgrund der Kettenspannung ein freies Einfedern des Hinterbaus verhindert und/oder es entsteht Schlupf am Aufstandpunkt des Hinterrades, da ein schlagartiges Antreiben der Hinterrads von der Kette erfolgt. Dies führt dazu, dass sich die Bodenhaftung reduzieren kann. Ferner verschlechtert sich die Seitenführung des Hinterrads, das heißt die Spurtreue bzw. Spurstabilität nimmt ab.

EP 2 722 949 A2 beschreibt eine Freilaufnabe für ein Fahrrad. Die Freilaufnabe besteht aus einem Nabengehäuse sowie einer Ritzelanordnung, die bei einer Antriebsbewegung durch den Fahrradfahrer über eine Freilaufkupplung verbunden werden. Die Freilaufkupplung besteht dabei im Wesentlichen aus zwei zueinander komplementär abgestuften Kupplungsringen, die zur Kraftübertragung in axialen Eingriff gebracht werden.

EP 3118019 A1 beschreibt eine Freilaufnabe für ein Fahrrad. Der darin beschriebene Freilaufmechanismus sorgt auf Grund einer Magnetanordnung bezüglich der Kupplungsringe dafür, dass eine akustische Entkopplung während des Freilaufs erfolgt.

Aufgabe der Erfindung ist es, das Fahrverhalten von Mountainbikes insbesondere im Moment des Einfederns des Fahrwerks zu verbessern.

Die Lösung der Aufgabe erfolgt erfindungsgemäß durch eine Hinterradnabe gemäß Anspruch 1 bzw. eine Fahrradachse gemäß Anspruch 13.

Die erfindungsgemäße Hinterradnabe ist insbesondere für Mountainbikes und besonderes bevorzugt für Downhill-Mountainbikes geeignet. Die Hinterradnabe weist einen drehbar auf einer Nabenachse gelagerten Nabenkörper und einen ebenfalls drehbar auf der Nabenachse gelagerten Ritzelträger auf. Der Ritzelträger ist hierbei üblicherweise mit der mehrere Zahnräder aufweisenden Ritzelkassette verbunden. Ferner ist ein Freilaufmechanismus zum Koppeln des Nabenkörpers mit dem Ritzelträger vorgesehen. Hierbei handelt es sich um einen üblichen Freilauf, durch den Kraft von dem Ritzel auf den Nabenkörper beim Treten übertragen wird, andererseits ein freies Drehen des Nabenkörpers möglich ist. Bei derartigen Freiläufen besteht die vorstehend beschriebene Problematik des Pedalrückschlags. Erfindungsgemäß ist ein Entkoppelelement zum Entkoppeln von Nabenkörper und Ritzelträger vorgesehen. Durch Betätigen bzw. Aktivieren des Entkoppelelements ist die Kraftübertragung zwischen dem Nabenkörper und dem Ritzelträger in beide Drehrichtungen vermieden bzw. unterbrochen. Erfolgt somit beispielsweise ein Betätigen bzw. Aktivieren des Entkoppelelements in Downhill-Passagen tritt erfindungsgemäß kein Pedalrückschlag auf. Insofern kann eine verbesserte Bodenhaftung erzielt werden. Dies führt zu einer verbesserten Seitenführung des Hinterrads und somit zur Verbesserung der Spurtreue bzw. Spurstabilität.

Ein üblicher Freilaufmechanismus weist zwei Freilaufelemente auf. Die beiden Freilaufelemente wirken derart zusammen, dass in eine Drehrichtung eine Kraftübertragung und in die andere Drehrichtung der Freilaufelemente relativ zueinander keine Kraftübertragung erfolgt. In dieser Drehrichtung erfolgt ein Durchrutschen der beiden Freilaufelemente. Beispielsweise weist das eine Freilaufelement eine Verzahnung und das andere Freilaufelement mehrere Sperrklinken auf. Ebenso können beide Freilaufelemente axial verzahnte Zahnräder sein, von denen eines in axialer Richtung einerseits verschiebbar und andererseits federbelastet ist. Durch das erfindungsgemäße Entkopplungselement erfolgt ein Entkoppeln der beiden Freilaufelemente derart, dass in beide Drehrichtungen der Freilaufelemente relativ zueinander keine Kraftübertragung erfolgt. Dies kann insbesondere dadurch erfolgen, dass durch das Entkopplungselement die beiden Freilaufelemente außer Eingriff gebracht werden. Insbesondere erfolgt durch das Entkopplungselement ein Vergrößern des Abstands der beiden Freilaufelemente zur Entkopplung von Nabenkörper und Ritzelträger.

Hierbei ist es beispielsweise möglich bei einem Freilaufmechanismus mit Sperrklinken durch das Entkopplungselement ein Ausklinken der Sperrklinken zu realisieren. Beispielsweise kann mit Hilfe des Entkopplungselements ein Sperrklinkenträger (1. Freilaufelement) von einer Zahnscheibe (2. Freilaufelement) gelöst bzw. der Abstand zwischen Sperrklinkenträger und Zahnscheibe vergrößert werden, so dass die Sperrklinken nicht mehr in die Zahnscheibe eingreifen.

Besonders bevorzugt ist es, dass zumindest ein Zahnring des Freilaufmechanismus axial angeordnete Zähne aufweist. Ein entsprechender Zahnring weist die Verzahnung somit an einer Stirnfläche auf. Dieser Zahnring kann mit Sperrklinken zusammenwirken. Besonders bevorzugt ist es, dass der Zahnring (1. Freilaufelement) mit einem zweiten Zahnring (2. Freilaufelement) zusammenwirkt, wobei zumindest einer der beiden Zahnringe federbelastet ist. Ein derartiger Axial-Freilauf ist beispielsweise in DE 9 419 357 beschrieben. Bei einem derartigen Axialfreilauf ist es bevorzugt, dass das Entkopplungselement zur Entkopplung zumindest einen der beiden Zahnringe insbesondere axial verschiebt. Aufgrund des Abstandes der beiden Zahnringe oder des einen Zahnrings von den Sperrklinken ist eine Entkopplung zwischen Nabenkörper und Ritzelträger realisiert.

Besonders bevorzugt ist es, dass zur Entkopplung das Entkopplungselement mit einem Betätigungselement verbunden ist. Dieses ist vorzugsweise am Fahrradlenker angeordnet. Die Betätigung des Entkopplungselements, das heißt insbesondere ein Verschieben eines Zahnrings kann hierbei elektrisch und/oder hydraulisch erfolgen. Insbesondere kann als Betätigungselement auch ein Seilzug vorgesehen werden. Bei Vorsehung eines elektrischen Betätigungselements kann ein axiales Verschieben des Zahnrings beispielsweise über einen Spindeltrieb erfolgen. Das Vorsehen eines elektrischen Betätigungselements ist insbesondere in Verbindung mit elektrisch betätigbaren Schaltelementen bevorzugt.

Vorzugsweise weist die Hinterradnabe eine insbesondere als Steckachse ausgebildete Achse auf. Die Achse weist einen Achskörper auf, wobei der Achskörper einen Hohlraum ausbildet. Diese dient zur Fixierung von Nabenkörper und Ritzelträger an Ausfallenden eines Fahrradrahmen-Hinterbaus. Die Achse kann hierbei als Achse mit Exzenterelement ausgebildet sein, wobei die Ausfallenden sodann beispielsweise geschlitzt sind, so dass ein Einführen der Achse erfolgen kann, während die Achse innerhalb der hinteren Nabe angeordnet ist. Bei Steckachsen werden diese zur Befestigung der Hinterradnabe am Hinterbau eingesteckt, nachdem die Hinterradnabe zwischen den Ausfallenden angeordnet ist. Die Ausfallenden müssen daher nicht geschlitzt sein, sondern weisen Bohrungen auf. Hierfür wird die Steckachse durch eine als Durchgangsbohrung ausgeführte Bohrung und durch die hintere Nabe hindurch gesteckt und in ein am anderen Ausfallende vorgesehenes Gewinde eingeschraubt. Die Fixierung erfolgt durch ein Einschrauben der Achse mit Hilfe eines Werkzeugs wie eines Inbusschlüssels oder durch Vorsehen eines Exzenters.

Besonders bevorzugt ist es, dass die Achse einen Hohlraum zur Aufnahme des Entkopplungselements aufweist. In dieser bevorzugten Ausführungsform ist das Entkopplungselement zur Entkopplung von Nabenkörper und Ritzelträger vorzugsweise zumindest teilweise innerhalb der Achse angeordnet. Vorzugsweise weist das Entkopplungselement mindestens ein Verbindungselement auf. Das Verbindungselement bewirkt beim Betätigen des Entkopplungselements ein insbesondere axiales Verschieben eines Zahnrings des vorzugsweise als Axial-Freilauf ausgebildeten Freilaufmechanismus. Vorzugsweise erfolgt beim Betätigen des Entkopplungselements ein Verschwenken des mindestens einen Verbindungselements. Hierbei ist es bevorzugt, dass das Verbindungselement aus einer Ruheposition in eine Betätigungsposition durch Betätigen des Betätigungselements verschwenkbar ist. In der Betätigungsposition erfolgt vorzugsweise ein axiales Verschieben eines der Zahnringe.

Ein Verschwenken des mindestens einen Verbindungselements kann dadurch erfolgen, dass das Verbindungselement eine Verzahnung aufweist, die in eine Zahnstange eingreift. Durch Verschieben der Zahnstange erfolgt sodann ein Verschwenken des mindestens einen Verbindungselements. Bevorzugt ist es, dass das Entkopplungselement ein Verschiebeelement aufweist. Das Verschiebeelement ist mit mindestens einem Verbindungselement verbunden, wobei ein Verschieben des Verschiebeelements ein Verschwenken des mindestens einen Verbindungselements bewirkt. Bei dem Verschiebeelement kann es sich insofern um eine Zahnstange handeln, die in eine Verzahnung an dem Verbindungselement eingreift. Bevorzugt ist es, dass das Verschiebeelement in dem Hohlraum der Achse verschiebbar angeordnet ist. Das Verschieben des Verschiebeelements erfolgt hierbei vorzugsweise mittels des Betätigungselements. Das Betätigungselement bewirkt das Verschieben des Verschiebeelements beispielsweise mit Hilfe eines Seilzugs.

Anstelle der Ausgestaltung des Verschiebeelements als Zahnstange oder dergleichen, ist es besonders bevorzugt, dass durch ein Verschieben des Verschiebeelements auch das mindestens eine Verbindungselement verschoben wird. Hierbei wird das Verschiebeelement gegen eine Anlagefläche geschoben. Dies bewirkt ein Verschwenken des mindestens einen Verbindungselements.

Besonders bevorzugt ist es, dass die Achse mindestens eine Öffnung aufweist, um ein Verschwenken des mindestens einen Verbindungselements in die Betätigungsposition zu ermöglichen. Die Öffnung, die insbesondere in der Mantelfläche der hohlen Achse angeordnet ist ermöglicht somit ein Ausschwenken des mindestens einen Verbindungselements aus der Umfangsfläche der Achse, die durch die äußere Mantelfläche gegeben ist. Hierbei ist das mindestens eine Verbindungselement vorzugsweise in der Ruheposition derart angeordnet, dass es innerhalb der mindestens einen Öffnung angeordnet ist. Das Verbindungselement steht somit in dieser Ausführungsform vorzugsweise nicht oder allenfalls geringfügig über die äußere Mantelfläche der Achse vor. Eine Seitenfläche der Öffnung dient hierbei als Anlagefläche für das Verbindungselement. Durch ein entsprechendes Verschieben des Verbindungselements bewirkt diese Fläche ein Herausschwenken des Verbindungselements.

Ferner ist es bevorzugt, dass das Verschiebeelement mit einem Federelement verbunden ist. Durch das Federelement, bei dem es sich beispielsweise um einen Elastomerkörper, eine Spiralfeder oder dergleichen handelt, wird das Verschiebeelement in der Ruheposition gehalten. Bevorzugt ist es, dass das Federelement ebenfalls innerhalb des Hohlkörpers der Achse angeordnet ist. Insbesondere kann das Federelement als Spiralfeder ausgebildet sein und innerhalb der Achse das beispielsweise stabförmig ausgebildete Betätigungselement umgeben.

Ferner betrifft die Erfindung eine Fahrradachse, insbesondere eine Steckachse. Diese dient zur erfindungsgemäßen Fixierung eines über einen Freilaufmechanismus mit einem Ritzelträger verbundenen Nabenkörper an Ausfallenden eines Fahrrad-Hinterbaus. Die Fahrradachse weist einen Achskörper auf. Der Achskörper kann auf einer Seite an einem Ende mit einer Mutter und am anderen Ende mit einem Exzenter verbunden sein. Derartige Achsen werden üblicherweise in schlitzförmige Öffnungen an den Ausfallenden des Fahrrad-Hinterbaus eingeschoben. Bei Steckachsen weist der Achskörper an einem Ende ein Gewinde auf. An dem gegenüberliegenden Ende kann ebenfalls ein Exzenter oder ein
Ansatz für ein Werkzeug wie einen Inbusschlüssel oder dergleichen vorgesehen sein. In dem Achskörper ist ein Hohlraum vorgesehen. Erfindungsgemäß ist in dem Hohlraum ein Entkopplungselement zum Entkoppeln von Nabenkörper und Ritzelträger vorgesehen. Die Fahrradachse ist wie vorstehend anhand der Hinterradnabe beschrieben vorteilhaft weitergebildet.

Nachfolgend wird die Erfindung anhand einer bevorzugten Ausführungsform unter Bezugnahme auf die anliegenden Zeichnungen näher erläutert.

Es zeigen:
- Fig. 1: eine schematische Schnittansicht einer Hinterradnabe mit eingekoppeltem Freilaufmechanismus,
- Fig. 2: eine schematische Schnittansicht der in Fig. 1 dargestellten Hinterradnabe mit ausgekoppeltem Freilaufmechanismus,
- Fig. 3: eine schematische perspektivische Ansicht einer Steckachse mit Verbindungselementen in Ruheposition,
- Fig. 4: eine schematische perspektivische Ansicht einer Steckachse mit Verbindungselementen in Betätigungsposition und
- Fig. 5: eine schematische Schnittansicht des Entkopplungselements.

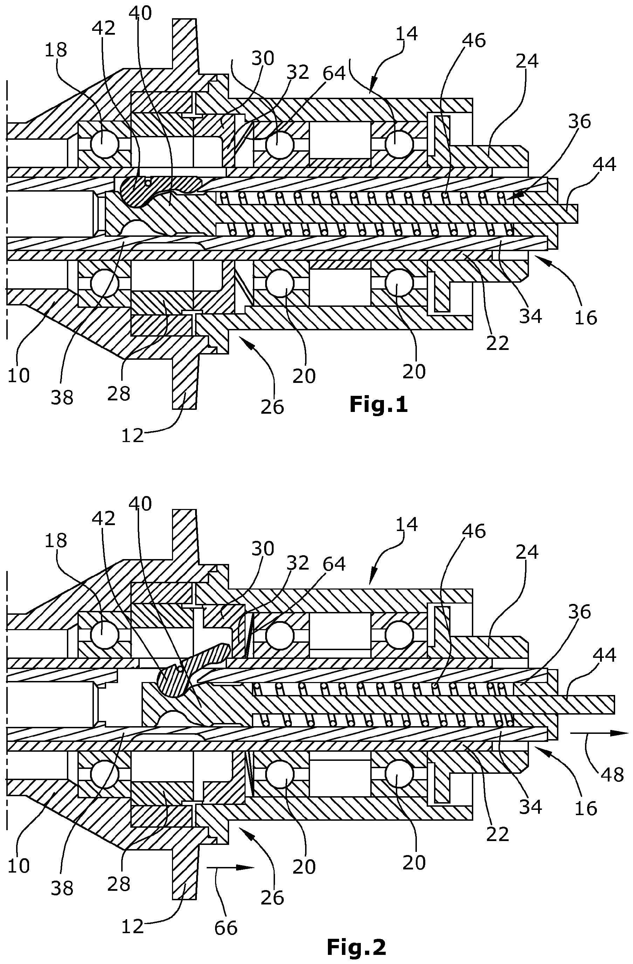

Eine Hinterradnabe weist einen Nabenkörper 10 auf, der in den Fign. 1 und 2 nur teilweise sichtbar ist. Im dargestellten Ausführungsbeispiel sind mit Ansätzen 12 des Nabenkörpers 10 Speichen verbunden. Ferner weist die Hinterradnabe einen Ritzelträger 14 auf. Sowohl der Nabenkörper 10 als auch der Ritzelträger 14 sind auf einer Nabenachse 16 drehbar gelagert. Hierbei ist der Nabenkörper 10 über in Fig. 1 rechte Kugellager 18 sowie über weitere nicht dargestellte Kugellager auf der Nabenachse 16 drehbar gelagert. Der Ritzelträger ist über ein Kugellagerpaar 20 drehbar auf der Nabenachse 16 angeordnet. Zum Vereinfachen der Montage ist die Nabenachse 16 in montiertem Zustand von einer Hülse 22 umgeben. Die Achse 16 bei der es sich in bevorzugter Ausführungsform um eine Steckachse handelt, wir zur Montage in die Hülse 22 eingesteckt. Zwischen der Nabenachse 16 und der Hülse 22 besteht Reibschluss. Auf der in den Fign. 1 und 2 rechten Seite ist die Hülse 22 mit einem Abdichtelement 24 verbunden. Durch dieses ist das Eindringen von Schmutz vermieden.

Zur Verbindung des Nabenkörpers 10 mit dem Ritzelträger 14 ist ein Freilaufmechanismus 26 vorgesehen. Im dargestellten Ausführungsbeispiel handelt es sich bei dem Freilaufmechanismus 26 um einen Axialfreilauf wie er beispielsweise in DE 9 419 357 beschrieben ist. Der Axialfreilauf weist einen stirnverzahnten Zahnring 28 auf, der in dem Nabenkörper 10 fixiert ist. Im dargestellten Ausführungsbeispiel ist der Zahnring 28 axial nicht verschiebbar. Ein weiterer Zahnring 30 ist innerhalb des Ritzelträgers angeordnet. Der Zahnring 30 ist zur Ausbildung des Freilaufs axial verschiebbar. Um einen sicheren Eingriff der beiden Stirnseiten der Zahnringe 28, 30 zu gewährleisten, ist eine Blattfeder 32 vorgesehen, die den axial verschiebbaren Zahnring 30 gegen den im Nabenkörper 10 fixierten Zahnring 28 drückt.

Die Hinterradachse 16 ist im dargestellten Ausführungsbeispiel der Erfindung hohl ausgebildet und weist insofern einen hülsenförmigen Achskörper 34 auf. Der Achskörper 34 bildet einen Hohlraum 36 aus. In dem Hohlraum 36 ist ein Entkopplungselement 38 angeordnet. Das Entkopplungselement 38 weist ein Verschiebeelement 40 auf. Mit dem Verschiebeelement 40 sind am Umfang verteilt mindestens drei Verbindungselemente 42 schwenkbar verbunden. Ferner ist mit dem Verschiebeelement 40 ein Betätigungselement 44 in Form eines Stabes oder Seilzugs fest verbunden. Der Seilzug 44 kann mit einem entsprechenden Betätigungshebel oder anders ausgedrückt mit einem Betätigungsmechanismus verbunden sein, der insbesondere am Lenker des Fahrrads angeordnet ist. Das Betätigungselement 44 ist im dargestellten Ausführungsbeispiel von einem als Spiralfeder ausgebildeten Federelement 46 umgeben.

Das Entkopplungselement 38 ist in Fig. 1 in einer eingekoppelten Position, das heißt in einer Position, in der die beiden Zahnringe 28, 30 miteinander verbunden sind, dargestellt. In dieser Position befinden sich das n Entkopplungselement bzw. die Verbindungselemente 42 des Entkopplungselements 38 in Ruheposition. Die Kraftübertragung bzw. die Funktion des Freilaufs funktioniert wie bei herkömmlichen Fahrrädern.

In der in Fig. 2 dargestellten Position sind die beiden Zahnringe 28, 30 ausgekoppelt. Das Entkopplungselement 38 bzw. insbesondere die Verbindungselemente 42 befinden sich in der Betätigungsposition. In dieser erfolgt keine Kraftübertragung mehr zwischen den beiden Zahnringen 28, 30.

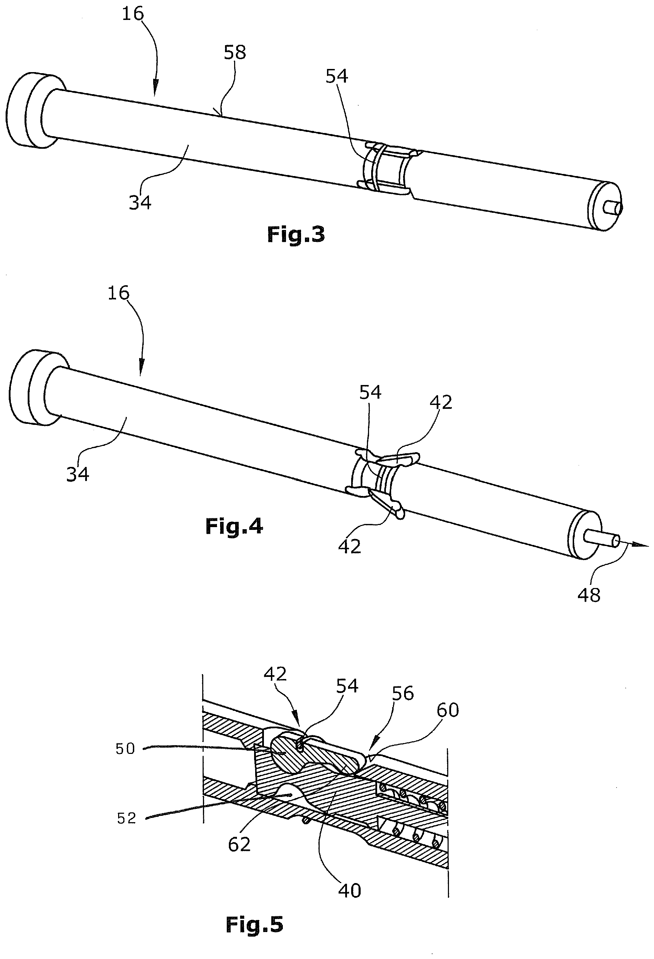

Entsprechend ist die Achse selbst in Fig. 3 in der eingekoppelten bzw. Ruheposition und in Fig. 4 in der ausgekoppelten bzw. Betätigungsposition dargestellt.

Zum Betätigen des Entkopplungselements (Fig. 5) erfolgt ein Betätigen des Betätigungselements 44 derart, dass dieses aus der in Fig. 1 bzw. Fig. 3 dargestellten Position aus der Achse 16 in die in Fig. 2 bzw. Fig. 4 dargestellte Position herausgezogen wird. Dies ist durch den Pfeil 48 in den Fign. 2 und 4 dargestellt. Durch das Betätigen des Betätigungselements 44 wird das Verschiebeelement 38 in Fig. 1 nach rechts in die in Fig. 2 dargestellte Position verschoben. Dies bewirkt eine Mitnahme der mindestens drei am Umfang verteilt angeordneten Verbindungselemente 42. Hierzu weisen die Verbindungselemente 42 einen konvex ausgebildeten Ansatz 50 auf, der jeweils in eine konkav ausgebildete Ausnehmung 52 am Verschiebeelement 40 eingreift. Über einen Federdraht oder einen O-Ring 54 sind die Verbindungselemente 42 schwenkbar in den Ausnehmungen 52 gehalten.

Die Verbindungselemente 42 sind zumindest überwiegend in Öffnungen 56 der Hülse 34 der Achse 16 angeordnet. In Ruheposition (Fign. 1 und 3) steht eine Außenseite der Verbindungselemente 42 nicht oder allenfalls geringfügig über eine äußere Mantelfläche 58 der Hülse 34 über.

Durch das Betätigen des Entkoppelungselements erfolgt somit beim Verschieben des Verschiebeelements 40 ein Herausschwenken der Verbindungselemente 42 in die Betätigungsposition (Fign. 2 und 4). Dies erfolgt dadurch, dass die Verbindungselemente in Fign. 1 und 3 ebenfalls nach rechts bewegt werden und über eine Anlage- oder Auskoppelfläche 60 nach außen verschwenkt werden. Die Auskoppelfläche 60 ist die Begrenzung der Öffnung 56, an der die Vorderseiten 62 der Verbindungselemente 42 anliegen. Bei dem Bewegen der Verbindungselemente 42 in Fign. 1 und 3 nach rechts erfolgt aufgrund der Neigung der Auskoppelflächen 60 ein Herausschwenken der Verbindungselemente 42 in die Betätigungsposition (Fign. 2 und 4).

Nach dem Herausschwenken der Verbindungselemente 42 gelangen diese in Kontakt mit einem radial nach innen weisenden Ansatzring 64 (Fign. 1 und 2). Der Ansatzring 64 ist fest mit dem Zahnring 30 verbunden, insbesondere einstückig mit diesem ausgebildet. Durch ein weiteres Bewegen des Entkopplungselements 38 in Richtung des Pfeils 48 wird der Zahnring 30 in Fign. 1 und 2 nach rechts in Richtung eines Pfeils 66 bewegt. Hierdurch erfolgt ein Auskoppeln der beiden Zahnringe 28, 30.

Zum Zurückführen des Entkopplungselements 38 in die Ruheposition und somit zum Zurückführen der beiden Zahnringe 28 30 in die eingekoppelte Position muss der insbesondere am Lenker angeordnete Betätigungsmechanismus lediglich gelöst werden. Aufgrund des Federelements 46 wird das Verschiebeelement 40 automatisch wieder in die in den Fign. 1 und 3 dargestellt Ruheposition zurückgedrückt. Hierdurch gleiten die Verbindungselemente 42 wieder in die Öffnung 56. Dies bewirkt ein Freigeben des Zahnrings 30. Dieser wird sodann durch die Tellerfeder 32 in die eingekoppelte Position gedrückt, so dass wiederum eine Kraftübertragung zwischen Ritzelträger 14 und Nabenkörper 10 über den Freilaufmechanismus 26 gewährleistet ist.

## Patentansprüche

1. Hinterradnabe, insbesondere für Mountainbikes mit
einem drehbar auf einer Nabenachse (16) gelagerten Nabenkörper (10),
einem drehbar auf der Nabenachse (16) gelagerten Ritzelträger (14) und
einem Freilaufmechanismus (26) zum Koppeln von Nabenkörper (10) und Ritzelträger (14),
**gekennzeichnet durch**
ein Entkopplungselement (38) zum Entkoppeln von Nabenkörper (10) und Ritzelträger (14), derart, dass in beide Drehrichtungen von Nabenkörper (10) und Ritzelträger (14) relativ zueinander keine Kraftübertragung auf das Hinterrad erfolgt.

2. Hinterradnabe nach Anspruch 1, **dadurch gekennzeichnet, dass** der Freilaufmechanismus zwei Freilaufelemente (28, 30) aufweist, die durch das Entkopplungselement (38) zum Entkoppeln von Nabenkörper (10) und Ritzelträger (14) außer Eingriff bringbar sind.

3. Hinterradnabe nach Anspruch 1 oder 2, **dadurch gekennzeichnet, dass** das Entkopplungselement (38) mit einem Betätigungselement (44), das vorzugsweise mit einem Betätigungsmechanismus am Fahrradlenker verbunden ist, verbunden ist.

4. Hinterradnabe nach einem der Ansprüche 1 bis 3, **dadurch gekennzeichnet, dass** der Freilaufmechanismus zumindest einen Zahnring (28, 30) mit vorzugsweise axial angeordneten Zähnen aufweist und vorzugsweise das Entkopplungselement (38) zur Entkopplung einen der Zahnringe (28, 30) insbesondere axial verschiebt.

5. Hinterradnabe nach einem der Ansprüche 1 bis 4, **gekennzeichnet durch** eine insbesondere als Steckachse ausgebildete Achse (16) zur Fixierung von Nabenkörper (10) und Ritzelträger (14) an Ausfallenden eines Fahrradrahmen-Hinterbaus.

6. Hinterradnabe nach einem der Ansprüche 1 bis 5, **dadurch gekennzeichnet, dass** die Achse einen Achskörper (34) mit einem Hohlraum (36) zur Aufnahme des Entkopplungselements (38) aufweist.

7. Hinterradnabe nach einem der Ansprüche 1 bis 6, **dadurch gekennzeichnet, dass** das Entkopplungselement mindestens ein Verbindungselement (42) aufweist, das beim Betätigen auf den Freilaufmechanismus (26) einwirkt, wobei das mindestens eine Verbindungselement (42) vorzugsweise schwenkbar ist.

8. Hinterradnabe nach einem der Ansprüche 4 bis 6, **dadurch gekennzeichnet, dass** das Entkopplungselement mindestens ein Verbindungselement (42) aufweist, das beim Betätigen einen der Zahnringe (28, 30) axial verschiebt, wobei das mindestens eine Verbindungselement (42) vorzugsweise schwenkbar ist.

9. Hinterradnabe nach Anspruch 7 oder 8, **dadurch gekennzeichnet, dass** das mindestens eine Verbindungselement (42) aus einer Ruheposition in eine Betätigungsposition durch Betätigen des Betätigungselements (44) verschwenkbar ist.

10. Hinterradnabe nach einem der Ansprüche 7 bis 9, **dadurch gekennzeichnet, dass** das Entkopplungselement (38) ein Verschiebeelement (40) aufweist, das mit dem mindestens einen Verbindungselement (42) verbunden ist, wobei ein Verschieben des Verschiebeelements (40) ein Verschwenken des mindestens einen Verbindungselements (42) bewirkt.

11. Hinterradnabe nach Anspruch 10, **dadurch gekennzeichnet, dass** das Verschiebeelement (40) in dem Hohlraum (36) der Achse (16) verschiebbar angeordnet ist und zum Verschieben vorzugsweise mit dem Betätigungselement (44) verbunden ist.

12. Hinterradnabe nach einem der Ansprüche 7 bis 11, **dadurch gekennzeichnet, dass** die Achse (16) mindestens eine Öffnung (56) aufweist, um ein Verschwenken des mindestens einen Verbindungselements (42) in die Betriebsposition zu ermöglichen, wobei das mindestens eine Verbindungselement (42) in Ruheposition vorzugsweise innerhalb der mindestens einen Öffnung (56) angeordnet ist.

13. Hinterradnabe nach einem der Ansprüche 10 bis 12, **dadurch gekennzeichnet, dass** das Verschiebeelement (40) mit einem Federelement (46) zum Halten des Verschiebeelements (40) in der Ruheposition verbunden ist.

14. Fahrradachse, insbesondere Steckachse zur Fixierung von über einen Freilaufmechanismus (26) miteinander verbundenen Nabenkörper (10) und Ritzelträger (14) einer Hinterradnabe nach einem der Ansprüche 1 bis 5 oder 7 bis 13 an Ausfallenden eines Fahrrad-Hinterbaus, mit
einem Achskörper (34) und
einem im Achskörper (34) vorgesehenen Hohlraum (36),
**dadurch gekennzeichnet, dass**
in dem Hohlraum (36) ein Entkopplungselement (38) zum Entkoppeln von Nabenkörper (10) und Ritzelträger (14) vorgesehen ist.

15. Fahrradachse nach Anspruch 14, **dadurch gekennzeichnet, dass** das Entkopplungselement mindestens ein Verbindungselement (42) aufweist, das beim Betätigen auf den Freilaufmechanismus (26) einwirkt, insbesondere einen der Zahnringe (28, 30) axial verschiebt, wobei das mindestens eine Verbindungselement (42) vorzugsweise schwenkbar ist.

16. Fahrradachse nach Anspruch 14 oder 15, **dadurch gekennzeichnet, dass** das Entkopplungselement (38) mit einem Betätigungselement (44), das vorzugsweise mit einem Betätigungsmechanismus am Fahrradlenker verbunden ist, verbunden ist.

17. Fahrradachse nach Anspruch 15 oder 16, **dadurch gekennzeichnet, dass** das mindestens eine Verbindungselement (42) aus einer Ruheposition in eine Betätigungsposition durch Betätigen des Betätigungselements (44) verschwenkbar ist.

18. Fahrradachse nach einem der Ansprüche 15 bis 17, **dadurch gekennzeichnet, dass** das Entkopplungselement (38) ein Verschiebeelement (40) aufweist, das mit dem mindestens einen Verbindungselement (42) verbunden ist, wobei ein Verschieben des Verschiebeelements (40) ein Verschwenken des mindestens einen Verbindungselements (42) bewirkt, wobei das Verschiebeelement (40) vorzugsweise in dem Hohlraum (36) der Achse (16) verschiebbar angeordnet ist.

19. Fahrradachse nach Anspruch 18, **dadurch gekennzeichnet, dass** das Verschiebeelement (40) zum Verschieben mit dem Betätigungselement (44) verbunden ist.

20. Fahrradachse nach einem der Ansprüche 15 bis 19, **dadurch gekennzeichnet, dass** die Achse (16) mindestens eine Öffnung (56) aufweist, um ein Verschwenken des mindestens einen Verbindungselements (42) in die Betriebsposition zu ermöglichen, wobei das mindestens eine Verbindungselement (42) in Ruheposition vorzugsweise innerhalb der mindestens einen Öffnung (56) angeordnet ist.

21. Fahrradachse nach einem der Ansprüche 18 bis 20, **dadurch gekennzeichnet, dass** das Verschiebeelement (40) mit einem Federelement (46) zum Halten des Verschiebeelements (40) in der Ruheposition verbunden ist.

## Claims

1. A rear wheel hub, particularly for mountain bikes, comprising
a hub body (10) rotatably mounted on a hub axle (16),
a pinion carrier (14) rotatably mounted on the hub axle (16) and
a freewheel mechanism (26) for coupling the hub body (10) and the pinion carrier (14),
**characterized by**
a decoupling element (38) for decoupling the hub body (10) and the pinion carrier (14) so that in both rotation directions of the hub body (10) and the pinion carrier (14) relative to one another no power is transmitted to the rear wheel.

2. The rear wheel hub according to claim 1, **characterized in that** the freewheel mechanism comprises two freewheel elements (28, 30) that can be disengaged by the decoupling element (38) used for decoupling the hub body (10) and the pinion carrier (14).

3. The rear wheel hub according to claim 1 or 2, **characterized in that** the decoupling element (38) is connected to an actuation element (44) that is preferably connected to an actuation mechanism on the bicycle handlebar.

4. The rear wheel hub according to any one of the claims 1 to 3, **characterized in that** the freewheel mechanism comprises at least one toothed ring (28, 30) preferably having axially arranged teeth, and that the decoupling element (38) for decoupling displaces one of the toothed rings (28, 30), particularly in axial direction.

5. The rear wheel hub according to any one of the claims 1 to 4, **characterized by** an axle (16) particularly formed as a quick-release axle for fixing the hub body (10) and the pinion carrier (14) on dropout ends of a bicycle frame chainstay.

6. The rear wheel hub according to any one of the claims 1 to 5, **characterized in that** the axle of an axle body (34) comprises a cavity (36) for receiving the decoupling element (38).

7. The rear wheel hub according to any one of the claims 1 to 6, **characterized in that** the decoupling element comprises at least one connection element (42) acting on the freewheel mechanism (26) when being actuated, wherein the at least one connection element (42) is preferably pivotable.

8. The rear wheel hub according to any one of the claims 4 to 6, **characterized in that** the decoupling element comprises at least one connection element (42) axially displacing one of the toothed rings (28, 30) when being actuated, wherein the at least one connection element (42) is preferably pivotable.

9. The rear wheel hub according to claim 7 or 8, **characterized in that** the at least one connection element (42) is pivotable from a resting position to an actuation position by actuating the actuation element (44).

10. The rear wheel hub according to any one of the claims 7 to 9, **characterized in that** the decoupling element (38) comprises a displacing element (40) connected with the at least one connection element (42), wherein a displacing of the displacing element (40) causes a pivoting motion of the at least one connection element (42).

11. The rear wheel hub according to claim 10, **characterized in that** the displacing element (40) is displaceably arranged in the cavity (36) of the axle (16) and is preferably connected for displacement to the actuation element (44).

12. The rear wheel hub according to any one of the claims 7 to 11, **characterized in that** the axle (16) comprises at least one opening (56) in order to allow for a pivoting motion of the at least one connection element (42) to the operating position, wherein the at least one connection element (42) being preferably arranged within the at least one opening (56) in the resting position.

13. The rear wheel hub according to any one of the claims 10 to 12, **characterized in that** the displacing element (40) is connected to a spring element (46) for holding the displacing element (40) in the resting position.

14. An bicycle axle, particularly quick-release axle for fixing a hub body (10) and a pinion carrier (14) of a rear wheel hub, connected to each other through a freewheel mechanism (26), according to any one of the claims 1 to 5 or 7 to 13, on dropout ends of a bicycle chainstay, comprising
an axle body (34) and
a cavity (36) provided in the axle body (34),
**characterized in that**
a decoupling element (38) for decoupling the hub body (10) and the pinion carrier (14) is provided in the cavity (36).

15. The bicycle axle according to claim 14, **characterized in that** the decoupling element comprises at least one connection element (42) acting on the freewheel mechanism (26) when being actuated and axially displacing particularly one of the toothed rings (28, 30), wherein the at least one connection element (42) is preferably pivotable.

16. The bicycle axle according to claim 14 or 15, **characterized in that** the decoupling element (38) is connected to an actuation element (44) that is preferably connected to an actuation mechanism on the bicycle handlebar.

17. The bicycle axle according to claim 15 or 16, **characterized in that** the at least one connection element (42) is pivotable from a resting position to an actuation position by actuating the actuation element (44),

18. The bicycle axle according to any one of the claims 15 to 17, **characterized in that** the decoupling element (38) comprises a displacing element (40) connected to the at least one connection element (42), wherein a displacing of the displacing element (40) causes a pivoting motion of the at least one connection element (42), wherein the displacing element (40) is preferably displaceably arranged in the cavity (36) of the axle (16).

19. The bicycle axle according to claim 18, **characterized in that** the displacing element (40) is connected for displacement to the actuation element (44).

20. The bicycle axle according to any one of the claims 15 to 19, **characterized in that** the axle (16) comprises at least one opening (56) in order to allow for a pivoting motion of the at least one connection element (42) to the operating position, wherein the at least one connection element (42) being preferably arranged within the at least one opening (56) in the resting position.

21. The bicycle axle according to any one of the claims 18 to 20, **characterized in that** the displacing element (40) is connected to a spring element (46) for holding the displacing element (40) in the resting position.

## Revendications

1. Moyeu de roue arrière notamment pour des VTT, avec
un corps de moyeu (10) monté en rotation sur un axe de moyeu (16),
un support de pignon (14) monté en rotation sur l'axe de moyeu (16) et
un mécanisme de roue libre (26) pour accoupler le corps de moyeu (10) au support de pignon (14),
**caractérisé par**
un élément de découplage (38) pour découpler le corps de moyeu (10) du support de pignon (14) de façon telle que, dans les deux sens de rotation du corps de moyeu (10) et du support de pignon (14) l'un par rapport à l'autre, il n'y ait pas de transmission d'effort.

2. Moyeu de roue arrière selon la revendication 1, **caractérisé en ce que** le mécanisme de roue libre comprend deux éléments de roue libre (28, 30) qui sont adaptés pour pouvoir être mis hors prise par l'élément de découplage (38) pour découpler le corps de moyeu (10) du support de pignon (14).

3. Moyeu de roue arrière selon la revendication 1 ou 2, **caractérisé en ce que** l'élément de découplage (38) est relié à un élément d'actionnement (44) qui est relié ; de préférence, à un mécanisme d'actionnement au guidon de vélo.

4. Moyeu de roue arrière selon l'une des revendications 1 à 3, **caractérisé en ce que** le mécanisme de roue libre comprend au moins une bague dentée (28, 30) ayant des dents disposées de manière axiale et que, de préférence, l'élément de découplage (38) déplace une des bagues dentées (28, 30) notamment axialement pour le découplage.

5. Moyeu de roue arrière selon l'une des revendications 1 à 4, **caractérisé par** un axe (16) configuré notamment comme axe enfichable pour fixer le corps de moyeu (10) et le support de pignon (14) à des pattes de cadre d'une partie arrière d'un cadre de vélo.

6. Moyeu de roue arrière selon l'une des revendications 1 à 5, **caractérisé en ce que** l'axe comprend un corps d'axe (34) ayant un espace creux (36) pour recevoir l'élément de découplage (38).

7. Moyeu de roue arrière selon l'une des revendications 1 à 6, **caractérisé en ce que** l'élément de découplage comprend au moins un élément de liaison (42) qui, lorsqu'il est actionné, agit sur le mécanisme de roue libre (26), ledit au moins un élément de liaison (42) étant, de préférence, pivotant.

8. Moyeu de roue arrière selon l'une des revendications 4 à 6, **caractérisé en ce que** l'élément de découplage comprend au moins un élément de liaison (42) qui, lorsqu'il est actionné, déplace axialement une des bagues dentées (28, 30), ledit au moins un élément de liaison (42) étant, de préférence, pivotant.

9. Moyeu de roue arrière selon la revendication 7 ou 8, **caractérisé en ce que** ledit au moins un élément de liaison (42) est adapté pour pouvoir être pivoté, par un actionnement de l'élément d'actionnement (44), d'une position de repos vers une position d'actionnement.

10. Moyeu de roue arrière selon l'une des revendications 7 à 9, **caractérisé en ce que** l'élément de découplage (38) comprend un élément de déplacement (40) qui est relié audit au moins un élément de liaison (42), un déplacement de l'élément de déplacement (40) ayant pour effet un pivotement dudit au moins un élément de liaison (42).

11. Moyeu de roue arrière selon la revendication 10, **caractérisé en ce que** l'élément de déplacement (40) est disposé de manière déplaçable dans l'espace creux (36) de l'axe (16) et est relié, pour être déplacé, de préférence, à l'élément d'actionnement (44).

12. Moyeu de roue arrière selon l'une des revendications 7 à 11, **caractérisé en ce que** l'axe (16) présente au moins une ouverture (56) pour rendre possible un pivotement dudit au moins un élément de liaison (42) vers la position de fonctionnement, ledit au moins un élément de liaison (42) étant disposé, dans la position de repos, de préférence, à l'intérieur de ladite au moins une ouverture (56).

13. Moyeu de roue arrière selon l'une des revendications 10 à 12, **caractérisé en ce que** l'élément de déplacement (40) est relié à un élément résilient (46) pour maintenir l'élément de déplacement (40) dans la position de repos.

14. Axe de vélo, notamment axe enfichable pour fixer un corps de moyeu (10) et un support de pignon (14) reliés l'un à l'autre par un mécanisme de roue libre (26), d'un moyeu de roue arrière selon l'une des revendications 1 à 5 ou 7 à 13 à des pattes de cadre d'une partie arrière d'un cadre de vélo, avec
un corps d'axe (34) et
un espace creux (36) prévu dans le corps d'axe (34),
**caractérisé en ce qu'**il est prévu dans l'espace creux (36), un élément de découplage (38) pour découpler le corps de moyeu (10) du support de pignon (14).

15. Axe de vélo selon la revendication 14, **caractérisé en ce que** l'élément de découplage comprend au moins un élément de liaison (42) qui, lors d'un actionnement, agit sur le mécanisme de roue libre (26), notamment déplace axialement une des bagues dentées (28, 30), ledit au moins un élément de liaison (42) étant, de préférence, pivotant.

16. Axe de vélo selon la revendication 14 ou 15, **caractérisé en ce que** l'élément de découplage (38) est relié à un élément d'actionnement (44) qui est relié, de préférence, à un mécanisme d'actionnement au guidon de vélo.

17. Axe de vélo selon la revendication 15 ou 16, **caractérisé en ce que** ledit au moins un élément de liaison (42) est adapté pour pouvoir être pivoté, par un actionnement de l'élément d'actionnement (44), d'une position de repos vers une position d'actionnement.

18. Axe de vélo selon l'une des revendications 15 à 17, **caractérisé en ce que** l'élément de découplage (38) comprend un élément de déplacement (40) qui est relié audit au moins un élément de liaison (42), un déplacement de l'élément de déplacement (40) ayant pour effet un pivotement dudit au moins un élément de liaison (42), ledit élément de déplacement (40) étant disposé de manière déplaçable, de préférence, dans l'espace creux (36) de l'axe (16).

19. Axe de vélo selon la revendication 18, **caractérisé en ce que**, pour un déplacement, l'élément de déplacement (40) est relié à l'élément d'actionnement (44).

20. Axe de vélo selon l'une des revendications 15 à 19, **caractérisé en ce que** l'axe (16) présente au moins une ouverture (56) pour rendre possible un pivotement dudit au moins un élément de liaison (42) vers la position de fonctionnement, ledit au moins un élément de liaison (42) étant disposé, dans la position de repos, de préférence, à l'intérieur de ladite au moins une ouverture (56).

21. Axe de vélo selon l'une des revendications 18 à 20, **caractérisé en ce que** l'élément de déplacement (40) est relié à un élément résilient (46) pour maintenir l'élément de déplacement (40) dans la position de repos.
